# EUROPÄISCHE PATENTSCHRIFT

(11) **EP 1 487 687 B1**
(45) Veröffentlichungstag und Bekanntmachung des Hinweises auf die Patenterteilung: **30.11.2005**
(21) Anmeldenummer: 03717110.5
(22) Anmeldetag: 26.02.2003
(51) Int. Cl.: B62D 15/02, B60R 16/02

(54) **LENKSTOCKMODUL FÜR EIN KRAFTFAHRZEUG**
STEERING COLUMN MODULE FOR A MOTOR VEHICLE
MODULE DE COLONNE DE DIRECTION CONCU POUR UN VEHICULE AUTOMOBILE

(30) Priorität: 25.03.2002 DE 10213224
(43) Veröffentlichungstag der Anmeldung: 22.12.2004
(73) Patentinhaber: Delphi Technologies Inc., Troy, MI 48007 (US)
(72) Erfinder: RUDOLPH, Gerd, 55459 Aspisheim (DE); BESIER, Holger, 65375 Oestrich-Winkel (DE)
(74) Vertreter: Becker, Bernd
(86) Internationale Anmeldenummer: PCT/DE2003/000607
(87) Internationale Veröffentlichungsnummer: WO 2003/080420

(56) Entgegenhaltungen:
- EP-A- 1 069 025
- WO-A-01/81119
- DE-A- 19 506 938

## Beschreibung

Die Erfindung bezieht sich auf ein Lenkstockmodul für ein Kraftfahrzeug mit einem in ein Modulgehäuse eingesetzten Lenkwinkelsensor, dessen einer Lenksäule zugeordneter Rotor mit mindestens einem ortsfesten Messrad zusammenwirkt, an dem über eine zentrale Leiterplatte des Lenkstockmoduls mit dem Bordnetz verbundene elektronische Messsensoren als Stator Winkeländerungen der Lenksäule erfassen, wobei mindestens ein Messrad in einem Gehäuse gelagert ist (WO 01/81119 A1)

Aus der DE 44 28 883 C1 ist eine elektrisch und/oder optisch wirkende Einrichtung für Kraftfahrzeuge bekannt, die unterhalb des Lenkrades an einer am Mantelrohr der Lenksäule ortsfest angeordneten Haltevorrichtung befestigt ist. Die Haltevorrichtung ist einstückiger Bestandteil eines zu einem Einzelschalter gehörenden Gehäuses. An der Haltevorrichtung ist eine Lenksäulenverkleidung angeordnet. Die Haltevorrichtung trägt eine als Spiralkabelkassette ausgebildete Verbindungseinrichtung sowie einen mit einer Leiterplatte versehenen Lenkwinkelsensor. Die Verbindungseinrichtung wird auf die dem Lenkrad zugeordnete Seite einer Gehäuseanordnung des Lenkwinkelsensors aufgesetzt und das feststehende Gehäuseteil der Verbindungseinrichtung wird mit der Haltevorrichtung verschraubt. Das verdrehbare Gehäuseteil der Verbindungseinrichtung greift mit einem als Blende ausgebildeten Bereich, der als Rotor dient, in eine umlaufend in der Gehäuseanordnung des Lenkwinkelsensors vorhandene Nut ein.

Im Weiteren offenbart die DE 197 55 094 A1 ein Lenkstockmodul, dem eine aus einer elektrischen Verbindungseinrichtung und einem Lenkwinkelsensor bestehende Einheit zugeordnet ist. Die Verbindungseinrichtung ist in einem Gehäuseabschnitt angeordnet, der einen Deckel für den auf einer Leiterplatte befestigten Stator des Lenkwinkelsensors bildet, wobei die Leiterplatte als den Deckel verschließender Boden ausgebildet ist.

Die zuvor erläuterten Lenkwinkelsensoren arbeiten jeweils mit einer optischen Detektionseinrichtung, die eine hinreichende Beabstandung zum Rotor ermöglicht. Diese Beabstandung ist erforderlich, da der der Lenksäule zugeordnete Rotor einen relativ unrunden Lauf aufweist, der gemeinsam mit weiteren einbaubedingten Toleranzen ausgeglichen werden muss.

Darüber hinaus ist aus der Praxis ein Lenkwinkelsensor bekannt, der einen an der Lenksäule befestigten Rotor umfasst, der mit einem Stator zusammenwirkt. Der Stator ist als Modul aufgebaut und umfasst neben mechanischen Bauteilen auch eine Leiterplatte mit einer Messelektronik und einer Übertragungselektronik zur Kopplung mit dem Bordnetz, wobei die Signale der Messelektronik an eine zentrale Leiterplatte des Lenkstockmoduls und von dort an das Bordnetz übermittelt werden. Somit wird sowohl die Leiterplatte des Stators als auch die Leiterplatte des Lenkstockmoduls mit teilweise identischen Bauteilen doppelt bestückt. Schließlich sind zwei für die Signalübertragung erforderliche Leiterplatten zu fertigen und zu montieren.

Es ist Aufgabe der Erfindung, ein Lenkstockmodul der eingangs genannten Art zu schaffen, das bei einer zuverlässigen Funktionsweise kostengünstig zu fertigen ist.

Erfindungsgemäß wird die Aufgabe dadurch gelöst, dass die Messsensoren auf der Leiterplatte befestigt sind und das Gehäuse auf der Leiterplatte festgelegt ist.

Aufgrund dieser Maßnahmen ist eine Trennung der mechanischen und der elektronischen Komponenten des Lenkwinkelsensors gegeben. Die mechanischen Komponenten des Lenkwinkelsensors, nämlich das mindestens eine Messrad und der Rotor, sind dem Gehäuse bzw. der Lenksäule zugeordnet und die elektronischen Komponenten, nämlich die Messsensoren und gegebenenfalls eine Auswerteelektronik, sind auf der zentralen Leiterplatte angeordnet, wobei die Leiterplatte mit weiteren Komponenten, beispielsweise einer Wickelfeder und Lenkstockschaltern, in Verbindung steht. Eine zusätzliche Leiterplatte für den Lenkwinkelsensor entfällt, weshalb eine relativ kostengünstige Fertigung des Lenkstockmoduls gewährleistet ist. Da die zentrale Leiterplatte sämtliche Bauteile zur Signalübertragung an das Bordnetz aufweist, ist auch eine zuverlässige Funktion des Lenkstockmoduls ohne überflüssige Schnittstellen sichergestellt.

Zweckmäßigerweise sind der Rotor und das Messrad als Zahnräder ausgebildet. Somit ist ein Abkämmen des Rotors auf dem Messrad unter geringer Reibung und eine Übertragung der Drehwinkeländerungen der Lenksäule mit einem relativ geringen Spiel gewährleistet.

Vorzugsweise treibt ein erstes Messzahnrad unter Zwischenschaltung eines Zwischenrades ein zweites Messzahnrad an, wobei beiden Messzahnrädern Messsensoren zugeordnet sind. Durch dieses Getriebe ist eine bestimmte Übersetzung innerhalb des Lenkwinkelsensors realisiert, durch die selbst kleinste Drehwinkeländerungen der Lenksäule mit einer relativ hohen Genauigkeit erfassbar sind.

Bevorzugt weisen das erste Messzahnrad und das zweite Messzahnrad jeweils einen stirnseitig eingesetzten Messmagnetring auf, der mit den als Streufeldsensoren ausgebildeten Messsensoren zusammenwirkt. Zweckmäßigerweise umfasst jedes der Messzahnräder ein Abschirmblech für den Messmagnetring. Der Lenkwinkelsensor arbeitet somit nach dem so genannten Stegmann-System, bei dem jeweils zwei Streufeldsensoren, Hall-Sensoren, einem Magneten zugeordnet sind. Vorteilhafterweise tauchen die Messsensoren in einer zu den Messrädern ausgerichteten Lage in das Gehäuse ein.

Um die Übertragung eines unrunden Laufs der Lenksäule nicht auf die Messräder zu übertragen, ist nach einer vorteilhaften Ausgestaltung der Erfindung zwischen dem Rotor und dem von dem Rotor angetriebenen ersten Messzahnrad eine in dem Gehäuse angeordnete Toleranzausgleichsvorrichtung vorgesehen.

Bevorzugt umfasst die Toleranzausgleichsvorrichtung ein Ausgleichszahnrad, das sowohl mit dem Rotor als auch mit dem ersten Messzahnrad federbelastet in Eingriff steht. Da der Abstand zwischen der Lenksäule und der Toleranzausgleichsvorrichtung toleranzbedingt schwankt und trotzdem ein störungsfreies Zusammenspiel zwischen dem Rotor und dem Messzahnrad gewährleistet sein muss, ist das federbelastete Ausgleichszahnrad vorgesehen, das somit flexibel gelagert ist und eine dem jeweiligen Abstand zwischen der Lenksäule und der Toleranzausgleichsvorrichtung entsprechende Position einnimmt, wobei der als Zahnrad ausgebildete Rotor für einen nahezu direkten Antrieb des Ausgleichszahnrades sorgt.

Um eine Lageänderung des Ausgleichszahnrades in bestimmten Grenzen zu ermöglichen, ist vorteilhafterweise das Ausgleichszahnrad unter einer bereichsweisen Freilassung seiner Verzahnung in einem Käfig gelagert, an dem ein Ende einer Zugfeder angreift, deren anderes Ende an dem Gehäuse befestigt ist. Die Zugfeder bewerkstelligt die Anlage des Ausgleichszahnrades sowohl an dem Rotor als auch an dem Messzahnrad.

Zur Sicherstellung einer kompakten Bauform lagert zweckmäßigerweise das aus einem Deckel sowie einem Sockel zusammengesetzte Gehäuse den Käfig des Ausgleichszahnrades, die beiden Messzahnräder sowie das Zwischenrad.

Bevorzugt weist der Deckel einen Lagerbolzen für das Zwischenrad auf, dessen freies Ende in eine korrespondierende Bohrung des Sockels eingreift. Zur Erzielung eines relativ geringen Montageaufwands ist der Lagerbolzen an den Deckel angespritzt und somit gemeinsam mit diesem in einem Fertigungsvorgang hergestellt.

Im Weiteren ist es erforderlich, Lagerungen für die Messzahnräder bereitzustellen. Dafür sind bevorzugt in den Deckel zueinander beabstandete Führungsbohrungen zur Aufnahme von Lagerachsen für die beiden Messzahnräder eingelassen, die in korrespondierende Öffnungen des Sockels eingreifen.

Um eine relativ einfache und sichere Befestigung des Gehäuses zu erzielen, weist vorzugsweise der Deckel Klipsarme zur Befestigung des Gehäuses auf der Leiterplatte auf.

Damit die auf der zentralen Leiterplatte angeordneten Messsensoren in den Bereich der Messzahnräder gelangen, ist vorteilhafterweise der Sockel im Bereich der Messmagnetringe der Messzahnräder mit jeweils zwei zueinander versetzten Ausnehmungen versehen, die die Messsensoren durchragen. Zweckmäßigerweise sind die Messsensoren zur Signalauswertung über die Leiterplatte mit einem Bordrechner gekoppelt. Bevorzugt umfasst die Leiterplatte zum Anschluss an den Bordrechner eine Bus-Schnittstelle.

Bevorzugt ist der Rotor einem eine Wickelfeder in einem Modulgehäuseoberteil abdeckenden Deckel zugeordnet. Der Deckel als drehbares, die Wickelfeder überspannendes Bauteil vollzieht die vorgenommenen Drehwinkeländerungen synchron zum Lenkrad und somit zur Lenksäule. Somit ändert der Rotor seine Lage in gleichem Maß wie die Lenksäule, weshalb exakte Messwerte bezüglich der Drehwinkeländerung erfasst werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

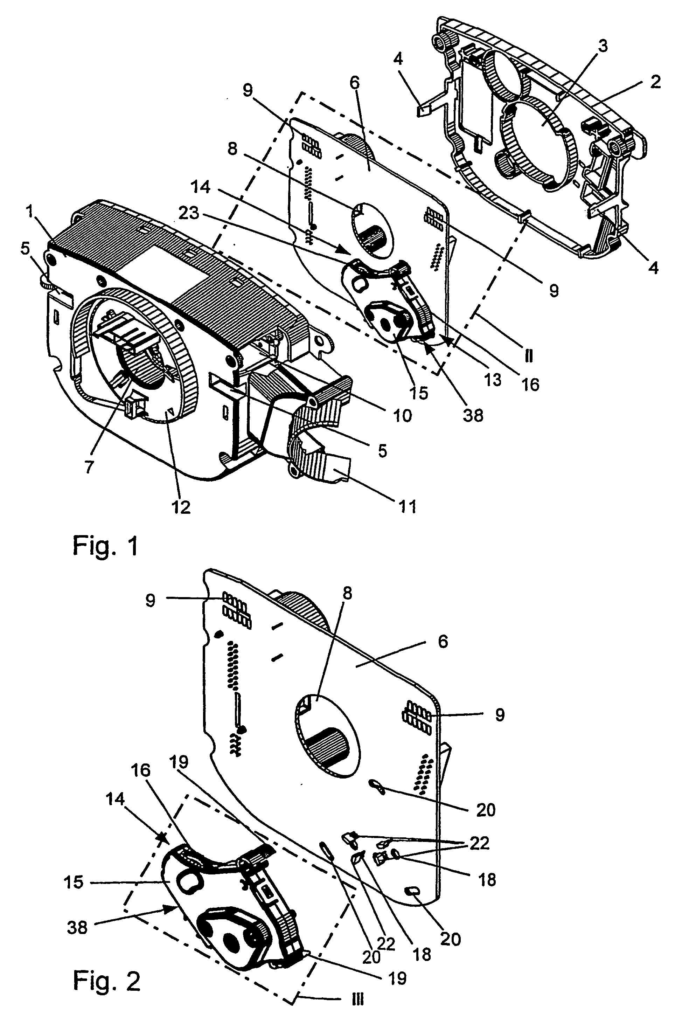

- Fig.1: eine Explosionsdarstellung eines erfindungsgemäßen Lenkstockmoduls,
- Fig.2: eine vergrößerte Explosionsdarstellung der Einzelheit II gemäß Fig. 1 und

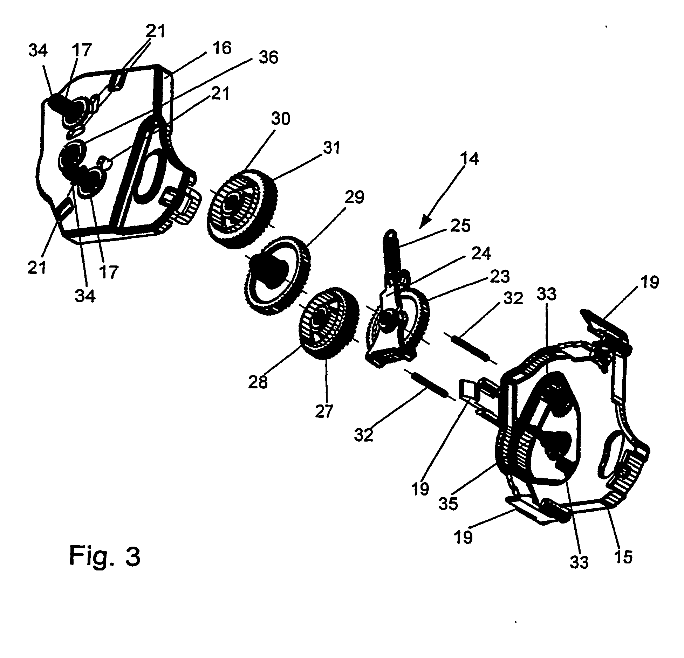

- Fig.3: eine vergrößerte Explosionsdarstellung der Einzelheit III gemäß Fig. 2.

Ein Lenkstockmodul umfasst ein aus einem Modulgehäuseoberteil 1 und einem Modulgehäuseunterteil 2 zusammengesetztes Modulgehäuse, wobei an dem Modulgehäuseunterteil 2 eine zylindrische Ausnehmung 3 zur Befestigung des Lenkstockmoduls an einem nicht dargestellten Mantelrohr eines Kraftfahrzeuges ausgeformt ist. Im Weiteren weist das Modulgehäuseunterteil 2 randseitige Klipsarme 4 auf, die beim Zusammenfügen des Modulgehäuseunterteils 2 und des Modulgehäuseoberteils 1 in korrespondierende Klipsöffnungen 5 des Modulgehäuseoberteils 1 eingreifen. Das Modulgehäuseunterteil 2 nimmt eine zentrale Leiterplatte 6 auf, die mit einem Bordnetz sowie einem Bordcomputer des Kraftfahrzeuges gekoppelt ist. Das das Modulgehäuseunterteil 2 randseitig übergreifende Modulgehäuseoberteil 1 ist mit einer Aussparung 12 zur Aufnahme einer Wickelfeder versehen, die dem Lenkrad zugeordnete elektrische Bauteile über die Leiterplatte 6 mit dem Bordnetz koppelt.

Die Leiterplatte 6 weist eine mit der Ausnehmung 3 des Modulgehäuseunterteils 2 sowie mit einer Bohrung 7 des Modulgehäuseoberteils 1 fluchtende zylindrische Öffnung 8 zur Durchführung einer nicht dargestellten Lenksäule auf, deren freies Ende oberhalb des Modulgehäuseoberteils 1 mit einem Lenkrad verbunden ist. Weiterhin ist die Leiterplatte 6 mit Anschlüssen 9 für nicht dargestellte Lenkstockschalter versehen, deren Bedienelemente Durchbrüche 10 des Modulgehäuseoberteils 1 durchragen. Ferner ist die Leiterplatte 6 mit einem Zündschloss verbunden, das in eine in dem Modulgehäuseoberteil 1 ausgebildete Öffnung 11 eingesetzt wird.

Um eine relative Änderung des Drehwinkels des Lenkrades gegenüber dem Lenkstockmodul festzustellen, ist zwischen der Verbindungseinrichtung und dem Modulgehäuseoberteil 1 des Lenkstockmodul ein Lenkwinkelsensor 13 angeordnet, der im Wesentlichen aus einem nicht dargestellten, als Zahnrad ausgebildeten Rotor und einem als ein erstes Messzahnrad 27 ausgebildeten Messrad 37 besteht, wobei dem ersten Messzahnrad 27 Messsensoren 22 zugeordnet sind. Der Rotor steht mit der Lenksäule in Verbindung.

Das dem Rotor zugeordnete Messrad 37 ist in einem Gehäuse 38 gelagert, das aus einem Deckel 15 und einem damit verklipster Sockel 16 zusammengesetzt ist. An dem Sockel 16 sind zueinander beabstandete Zentrierbolzen 17 angeformt, die in entsprechende Zentrierbohrungen 18 der Leiterplatte 6 eingreifen. Zur Befestigung des Gehäuses 38 ist der Deckel 15 mit Klipsarmen 19 zum Einsetzen in Klipsausnehmungen 20 der Leiterplatte 6 versehen. Im Weiteren weist der Sockel 16 Ausnehmungen 21 auf, in die die auf der Leiterplatte 6 befestigten Messsensoren 22, die als Streufeldsensoren, so genannte Hall-Sensoren, ausgebildet sind, in das Gehäuse 38 eintauchen. Aufgrund der Zuordnung der Messsensoren 22 zu der Leiterplatte 6 ist eine Trennung der elektrischen/elektronischen Bauteile und der mechanischen Bauteile des Lenkwinkelsensors 13 gegeben.

Zur Erfassung einer Drehwinkeländerung der Lenksäule treibt der Rotor ein einer Toleranzausgleichsvorrichtung 14 zugeordnetes Ausgleichszahnrad 23 an, das über einen Käfig 24 schwimmend in dem Gehäuse 38 gelagert ist. An dem Käfig 24 ist ein Ende einer Zugfeder 25 befestigt, deren anderes Ende an einem an dem Deckel 15 angeformten Haltebolzen 26 festgelegt ist. Durch die schwimmende federbelastete Anordnung des Ausgleichszahnrades 23 ist ein Toleranzausgleich zwischen dem Rotor, der aufgrund der Fertigung und Lagerung der Lenksäule einen unrunden Lauf aufweist, und dem Gehäuse 38 gewährleistet. Das Ausgleichszahnrad 23 kämmt auf dem ersten Messzahnrad 27 ab, das stirnseitig einen Messmagnetring 28 trägt. Über das erste Messzahnrad 27 wird ein Zwischenrad 29 in Rotation versetzt, das wiederum ein zweites ebenfalls mit einem stirnseitigen Messmagnetring 30 versehenes Messzahnrad 31 antreibt.

Dar erste Messzahnrad 27 und das zweite Messzahnrad 31 sind auf Lagerachsen 32 angeordnet, die mit einem Ende in Führungsbohrungen 33 des Deckels 15 eingesetzt sind. Mit dem anderen Ende ragen die Lagerachsen 32 in korrespondierende Öffnungen 34 des Sockels 16, die in die Zentrierbolzen 17 eingelassen sind. Das Zwischenrad 29 ist auf einem dem Deckel 15 zugeordneten Lagerbolzen 35 gehalten, dessen freies Ende in eine korrespondierende Bohrung 36 des Sockels 16 eingreift.

Die Messsensoren 22, von denen jeweils zwei einem der Messmagnetringe 28, 30 zugeordnet sind, detektieren die Rotation der Messmagnetringe 28, 30 aufgrund einer Drehwinkeländerung der Lenksäule nach dem so genannten Stegmann-System. Die Signale der der Leiterplatte 6 zugeordneten Messsensoren 22 werden ohne Zwischenschaltung weiterer elektronischer Bauteile direkt an das Bordnetz bzw. den Bordcomputer übertragen.

### Bezugszeichenliste

- 1.: Modulgehäuseoberteil
- 2.: Modulgehäuseunterteil
- 3.: Ausnehmung
- 4.: Klipsarme
- 5.: Klipsöffnung
- 6.: Leiterplatte
- 7.: Bohrung
- 8.: Öffnung
- 9.: Anschluss
- 10.: Durchbruch
- 11.: Öffnung
- 12.: Aussparung
- 13.: Lenkwinkelsensor
- 14.: Toleranzausgleichsvorrichtung
- 15.: Deckel
- 16.: Sockel
- 17.: Zentrierbolzen
- 18.: Zentrierbohrung
- 19.: Klipsarm
- 20.: Klipsausnehmung
- 21.: Ausnehmung v. 16
- 22.: Messsensor
- 23.: Ausgleichszahnrad
- 24.: Käfig
- 25.: Zugfeder
- 26.: Haltebolzen
- 27.: erstes Messzahnrad
- 28.: Messmagnetring
- 29.: Zwischenrad
- 30.: Messmagnetring
- 31.: zweites Messzahnrad
- 32.: Lagerachse
- 33.: Führungsbohrung v. 15
- 34.: Öffnung v. 16
- 35.: Lagerbolzen
- 36.: Bohrung
- 37.: Messrad
- 38.: Gehäuse

## Patentansprüche

1. Lenkstockmodul für ein Kraftfahrzeug mit einem in ein Modulgehäuse (1, 2) eingesetzten Lenkwinkelsensor (13), dessen einer Lenksäule zugeordneter Rotor mit mindestens einem ortsfesten Messrad (37) zusammenwirkt, an dem über eine zentrale Leiterplatte (6) des Lenkstockmoduls mit dem Bordnetz verbundene elektronische Messsensoren (22) als Stator Winkeländerungen der Lenksäule erfassen, wobei mindestens ein Messrad (37) in einem Gehäuse (38) gelagert ist, **dadurch gekennzeichnet, dass** die Messsensoren (22) auf der Leiterplatte (6) befestigt sind und das Gehäuse (38) auf der Leiterplatte (6) festgelegt ist.

2. Lenkstockmodul nach Anspruch 1, **dadurch gekennzeichnet, dass** der Rotor und das Messrad (37) als Zahnräder ausgebildet sind.

3. Lenkstockmodul nach Anspruch 2, **dadurch gekennzeichnet, dass** ein erstes Messzahnrad (27) unter Zwischenschaltung eines Zwischenrades (29) ein zweites Messzahnrad (31) antreibt, wobei beiden Messzahnrädern (27, 31) Messsensoren (22) zugeordnet sind.

4. Lenkstockmodul nach Anspruch 3, **dadurch gekennzeichnet, dass** das erste Messzahnrad (27) und das zweite Messzahnrad (31) jeweils einen stirnseitig eingesetzten Messmagnetring (28, 30) aufweisen, der mit den als Streufeldsensoren ausgebildeten Messsensoren (22) zusammenwirkt.

5. Lenkstockmodul nach Anspruch 4, **dadurch gekennzeichnet, dass** jedes der Messzahnräder (27, 31) ein Abschirmblech für den Messmagnetring (28, 30) umfasst.

6. Lenkstockmodul nach einem der Ansprüche 1 bis 5, **dadurch gekennzeichnet, dass** die Messsensoren (22) in einer zu den Messzahnrädern (27, 31) ausgerichteten Lage in das Gehäuse (38) eintauchen.

7. Lenkstockmodul nach einem der Ansprüche 1 bis 6, **dadurch gekennzeichnet, dass** zwischen dem Rotor und dem von dem Rotor angetriebenen ersten Messzahnrad (27) eine in dem Gehäuse (38) angeordnete Toleranzausgleichsvorrichtung (14) vorgesehen ist.

8. Lenkstockmodul nach Anspruch 7, **dadurch gekennzeichnet, dass** die Toleranzausgleichsvorrichtung (14) ein Ausgleichszahnrad (23) umfasst, das sowohl mit dem Rotor als auch mit dem zugeordneten ersten Messzahnrad (27) federbelastet in Eingriff steht.

9. Lenkstockmodul nach Anspruch 8, **dadurch gekennzeichnet, dass** das Ausgleichszahnrad (23) unter einer bereichsweisen Freilassung seiner Verzahnung in einem Käfig (24) gelagert ist, an dem ein Ende einer Zugfeder (25) angreift, deren anderes Ende an dem Gehäuse (38) befestigt ist.

10. Lenkstockmodul nach Anspruch 9, **dadurch gekennzeichnet, dass** das aus einem Deckel (15) sowie einem Sockel (16) zusammengesetzte Gehäuse (38) den Käfig (24) des Ausgleichszahnrades (23), die beiden Messzahnräder (27, 31) sowie das Zwischenrad (30) lagert.

11. Lenkstockmodul nach Anspruch 10, **dadurch gekennzeichnet, dass** der Deckel (15) einen Lagerbolzen (35) für das Zwischenrad (30) aufweist, dessen freies Ende in eine korrespondierende Bohrung (36) des Sockels (16) eingreift.

12. Lenkstockmodul nach Anspruch 10 oder 11, **dadurch gekennzeichnet, dass** in den Deckel (15) zueinander beabstandete Führungsbohrungen (33) zur Aufnahme von Lagerachsen (32) für die beiden Messzahnräder (27, 31) eingelassen sind, die in korrespondierende Öffnungen (34) des Sockels (16) eingreifen.

13. Lenkstockmodul nach einem der Ansprüche 10 bis 12, **dadurch gekennzeichnet, dass** der Deckel (15) Klipsarme (19) zur Befestigung des Gehäuses auf der Leiterplatte (6) aufweist.

14. Lenkstockmodul nach Anspruch 10, **dadurch gekennzeichnet, dass** der Sockel (16) im Bereich der Messmagnetringe (28, 30) der Messzahnräder (27, 31) mit jeweils zwei zueinander versetzten Ausnehmungen (21) versehen ist, die die Messsensoren (22) durchragen.

15. Lenkstockmodul nach einem der Ansprüche 1 bis 14, **da**- **durch gekennzeichnet, dass** die Messsensoren (22) zur Signalauswertung über die Leiterplatte (6) mit einem Bordrechner gekoppelt sind.

16. Lenkstockmodul nach Anspruch 15, **dadurch gekennzeichnet, dass** die Leiterplatte (6) zum Anschluss an den Bordrechner eine Bus-Schnittstelle umfasst.

17. Lenkstockmodul nach einem der Ansprüche 1 bis 8, **dadurch gekennzeichnet, dass** der Rotor einem eine Wickelfeder in einem Modulgehäuseoberteil (1) abdeckenden Deckel zugeordnet ist.

## Claims

1. Steering column module for a motor vehicle having inserted in a module housing (1, 2) a steering angle sensor (13) whose rotor assigned to a steering column acts in conjunction with at least one fixed measuring wheel (37) on which via a central printed circuit board (6) in the steering column module electronic measuring sensors (22) as stator connected to the onboard power supply capture changes in angle of the steering column, wherein at least one measuring wheel (37) is mounted in a housing (38), **characterised in that** the measuring sensors (22) are fastened on the printed circuit board (6) and the housing (38) is fixed in place on the printed circuit board (6).

2. Steering column module according to claim 1, **characterised in that** the rotor and the measuring wheel (37) are constructed in the form of gear wheels.

3. Steering column module according to claim 2, **characterised in that** a first measuring gear wheel (27) with interposition of an intermediate wheel (29) drives a second measuring gear wheel (31), wherein both measuring gear wheels (27, 31) are assigned to measuring sensors (22).

4. Steering column module according to claim 3, **characterised in that** the first measuring gear wheel (27) and the second measuring gear wheel (31) each have a measuring ring magnet (28, 30) inserted in the end face which acts in conjunction with the measuring sensors (22) constructed in the form of stray field sensors.

5. Steering column module according to claim 4, **characterised in that** each of the measuring gear wheels (27, 31) comprises a shielding plate for the measuring ring magnet (28, 30).

6. Steering column module according to one of claims 1 to 5, **characterised in that** the measuring sensors (22) dip into the housing (38) in a position directed towards the measuring gear wheels (27, 31).

7. Steering column module according to one of claims 1 to 6, **characterised in that** between the rotor and the first measuring gear wheel (27) driven by the rotor a tolerance compensation device (14) arranged in the housing (38) is provided.

8. Steering column module according to claim 7, **characterised in that** the tolerance compensation device (14) comprises a compensating gear wheel (23) which is in spring-loaded engagement both with the rotor and with the assigned first measuring gear wheel (27).

9. Steering column module according to claim 8, **characterised in that** the compensating gear wheel (23) is mounted in a cage (24) with exposure of its toothed structure in some places on which cage one end of a tension spring (25) engages whose other end is fastened to the housing (38).

10. Steering column module according to claim 9, **characterised in that** the housing (38) composed of a cover (15) and a base (16) accommodates the cage (24) of the compensating gear wheel (23), the two measuring gear wheels (27, 31) and the intermediate wheel (29).

11. Steering column module according to claim 10, **characterised in that** the cover (15) has a bearing pin (35) for the intermediate wheel (29) whose free end engages in a corresponding drill hole (36) in the base (16).

12. Steering column module according to claim 10 or 11, **characterised in that** let into the cover (15) and spaced relative to one another are guide bores (33) for accommodating bearing axles (32) for the two measuring gear wheels (27, 31) which engage in corresponding openings (34) in the base (16).

13. Steering column module according to one of claims 10 to 12, **characterised in that** the cover (15) possesses clip arms (19) for fastening the housing on the printed circuit board (6).

14. Steering column module according to claim 10, **characterised in that** in the region of each of the measuring ring magnets (28, 30) of the measuring gear wheels (27, 31) the base (16) is provided with two apertures (21) offset relative to one another through which the measuring sensors (22) project.

15. Steering column module according to one of claims 1 to 14, **characterised in that** the measuring sensors (22) are linked to an onboard computer via the printed circuit board (6) for signal evaluation.

16. Steering column module according to claim 15, **characterised in that** the printed circuit board (6) comprises a bus interface for connection to the onboard computer.

17. Steering column module according to one of claims 1 to 8, **characterised in that** the rotor is associated with a volute spring in a cover covering the upper part (1) of the module housing.

## Revendications

1. Module de colonne de direction pour un véhicule automobile, avec un capteur d'angle de braquage (13) qui est installé dans un boîtier de module (1, 2) et dont le rotor associé à une colonne de direction coopère avec au moins une roue de mesure fixe (37), au niveau de laquelle des capteurs électroniques de mesure (22) faisant fonction de stator et connectés au réseau de bord par l'intermédiaire d'une plaque centrale de circuit imprimé (6) du module de colonne de direction détectent des variations d'angle, au moins une roue de mesure (37) étant montée dans un boîtier (38), **caractérisé en ce que** les capteurs de mesure (22) sont fixés sur la plaque de circuit imprimé (6) et le boîtier (38) est assujetti à la plaque de circuit imprimé (6).

2. Module de colonne de direction selon la revendication 1, **caractérisé en ce que** le rotor et la roue de mesure (37) sont conformés en roues dentées.

3. Module de colonne de direction selon la revendication 2, **caractérisé en ce qu'**une première roue de mesure dentée (27) entraîne, avec interposition d'une roue intermédiaire (29), une seconde roue de mesure dentée (31), des capteurs de mesure (22) étant associés aux deux roues de mesure dentées (27, 31).

4. Module de colonne de direction selon la revendication 3, **caractérisé en ce que** la première roue de mesure dentée (27) et la seconde roue de mesure dentée (31) comportent chacune un anneau magnétique de mesure monté frontalement (28, 30) qui coopère avec les capteurs de mesure (22) conformés en capteurs à champ de dispersion.

5. Module de colonne de direction selon la revendication 4, **caractérisé en ce que** chacune des roues de mesure dentées (27, 31) comporte une tôle de blindage pour l'anneau magnétique de mesure (28, 30).

6. Module de colonne de direction selon l'une des revendications 1 à 5, **caractérisé en ce que** les capteurs de mesure (22) pénètrent dans le boîtier (38) dans une position orientée vers les roues de mesure dentées (27, 31).

7. Module de colonne de direction selon l'une des revendications 1 à 6, **caractérisé en ce qu'**entre le rotor et la première roue de mesure dentée (27) entraînée par le rotor est prévu un dispositif de compensation de tolérance (14) disposé dans le boîtier (38).

8. Module de colonne de direction selon la revendication 7, **caractérisé en ce que** le dispositif de compensation de tolérance (14) comprend une roue dentée de compensation (23) qui est en prise, sous sollicitation élastique, aussi bien avec le rotor qu'avec la première roue de mesure dentée associée (27).

9. Module de colonne de direction selon la revendication 8, **caractérisé en ce que** la roue dentée de compensation (23) est montée, moyennant une libération par endroits de sa denture, dans une cage (24) sur laquelle agit une extrémité d'un ressort de traction (25) dont l'autre extrémité est fixée au boîtier (38).

10. Module de colonne de direction selon la revendication 9, **caractérisé en ce que** le boîtier (38) composé d'un couvercle (15) ainsi que d'un socle (16) renferme la cage (24) de la roue dentée de compensation (23), les deux roues de mesure dentées (27, 31) ainsi que la roue intermédiaire (30).

11. Module de colonne de direction selon la revendication 10, **caractérisé en ce que** le couvercle (15) comporte, pour la roue intermédiaire (30), un axe (35) dont l'extrémité libre pénètre dans un trou correspondant (36) du socle (16).

12. Module de colonne de direction selon la revendication 10, **caractérisé en ce que** dans le couvercle (15) sont ménagés des trous de guidage distants les uns des autres (33) qui sont destinés à recevoir des axes de montage (32) pour les deux roues de mesure dentées (27, 31), lesquels s'engagent dans des ouvertures correspondantes (34) du socle (16).

13. Module de colonne de direction selon l'une des revendications 10 à 12, **caractérisé en ce que** le couvercle (15) comporte des bras de clipsage (19) pour la fixation du boîtier sur la plaque de circuit imprimé (6).

14. Module de colonne de direction selon la revendication 10, **caractérisé en ce que** le socle (16) est pourvu, dans la zone de chacun des anneaux magnétiques de mesure (28, 30) des roues de mesure dentées (27, 31), de deux évidements décalés l'un par rapport à l'autre (21) que traversent les capteurs de mesure (22).

15. Module de colonne de direction selon l'une des revendications 1 à 14, **caractérisé en ce que**, pour l'analyse des signaux, les capteurs de mesure (22) sont couplés à un ordinateur de bord par l'intermédiaire de la plaque de circuit imprimé (6).

16. Module de colonne de direction selon la revendication 15, **caractérisé en ce que**, pour la connexion à l'ordinateur de bord, la plaque de circuit imprimé (6) comprend une interface de bus.

17. Module de colonne de direction selon l'une des revendications 1 à 8, **caractérisé en ce que** le rotor est associé à un couvercle recouvrant un ressort en spiral dans une partie supérieure de boîtier de module (1).
